Europäisches Patentamt

(19) European Patent Office

Office européen des brevets

(11) Publication number: **0 227 962**
**B1**

## (12) EUROPEAN PATENT SPECIFICATION

(45) Date of publication of the patent specification:
25.04.90

(21) Application number: 86116584.3

(22) Date of filing: 28.11.86

(51) Int. Cl.⁴: **B60R 3/00**

(54) Improved cab for an industrial vehicle.

(30) Priority: 13.12.85 IT 5422085 U

(43) Date of publication of application:
08.07.87 Bulletin 87/28

(45) Publication of the grant of the patent:
25.04.90 Bulletin 90/17

(84) Designated Contracting States:
DE ES FR GB SE

(56) References cited:
DE-A- 3 029 392
FR-A- 2 215 052

AUTOMOTIVE ENGINEERING, vol. 89, no. 7, July 1981,
pages 76-79, Dallas, Texas, US; "Low-drag truck cab
has detail airflow management"

(73) Proprietor: IVECO FIAT S.p.A., Via Puglia 35,
I-10156 Torino(IT)

(72) Inventor: 1Savio, Piero, Via Boito, 1,
I-10040 Borgaretto(IT)

(74) Representative: Boggio, Luigi et al, STUDIO TORTA
Società Semplice Via Viotti, 9, I-10121 Torino(IT)

ACTORUM AG

## Description

This invention relates to a cab for an industrial vehicle. More particularly, the invention relates to a combined bumper and cab access footboard for an industrial vehicle.

In vehicles of known type, the front bumper is mounted in a position forward of the access footboard such that an observer positioned to the side of the vehicle can clearly see a gap separating each end edge of the bumper from a respective upright of the footboard which gives access to the cab interior. A combined bumper and footboard formed in this manner is firstly of poor appearance because of the presence of this gap, the width of which is not always constant. Aerodynamic disadvantages have also been noted in that the gap creates air vortices when the vehicle is in motion.

The object of the present invention is to provide a combined bumper-footboard for an industrial vehicle cab which obviates the aforesaid drawbacks of cabs of known type.

Said object is atttained according to the present invention by an industrial vehicle cab comprising a front bumper and an interior access footboard bounded on the side facing said bumper by a respective upright, characterised in that said bumper comprises respective end portions which at least partially cover an edge of said upright externally.

The present invention will be more apparent from the description of a preferred embodiment thereof given hereinafter by way of non-limiting example with reference to the accompanying drawing, in which:

Figure 1 shows a cab constructed in accordance with the present invention;

Figure 2 is a perspective view, taken from above, of a detail of the cab of Figure 1 to an enlarged scale; and

Figure 3 is a section on the line III-III of Figure 2.

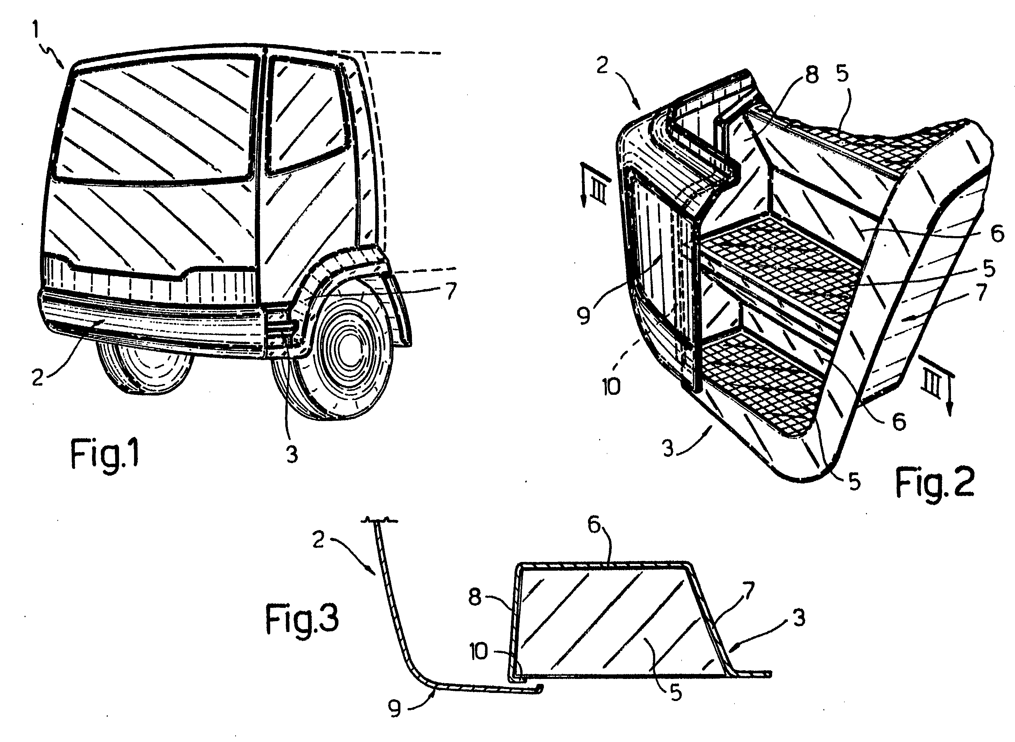

In Figure 1, the reference numeral 1 indicates overall an industrial vehicle drive cab of which the front bumper 2 and a footboard 3 providing access to the interior of said cab 1 are clearly shown.

As shown in Figure 2, the footboard 3 comprises a plurality of steps 5 connected together by suitably shaped vertical walls 6. the footboard 3 is laterally bounded, on the side facing the wheel of said vehicle, by a body portion 7 which also acts as a mudguard. On the side opposite the portion 7, the steps 5 of the footboard 3 are bounded by a vertical upright 8 which also connects the various steps 5 together and to the respective vertical walls 6.

According to the invention, the bumper 2 comprises at each end a respective portion 9 which extends essentially along the vehicle side by a distance sufficient to externally cover an edge 10 of the upright 8 (see also Figure 3).

The advantages of the cab constructed in accordance with the present invention are apparent from an examination of its characteristics. In this respect, said gap no longer exists on the vehicle side, and this not only results in improved appearance but also compensates for any assembly tolerances in fixing the bumper to the footboard. It is also apparent that the vortices caused by the presence of the gap are now eliminated. It is evident that the structure of the bumper 2 and footboard 3 can be widely varied while maintaining the concept of superposing a portion of the bumper 2 on the footboard 3, as heretofore specified.

## Claims

1. An industrial vehicle cab (1) comprising a front bumper (2) and an interior access footboard (3) bounded on the side facing said bumper (2) by a respective upright (8), characterised in that said bumper (2) comprises respective end portions (9) which at least partially cover an edge (10) of said upright (8) externally.

2. A cab as claimed in claim 1, characterised in that each said end portion (9) of said bumper (2) is disposed essentially in a position parallel to a respective side of said vehicle.

## Patentansprüche

1. Kabine (1) für ein Nutzfahrzeug, mit einer Frontstoßstange (2) und einem Fußsteig (3), der als Zutritt für den Innenraum dient und an der der Stoßstange (2) zugewandten Seite an einem entsprechenden Pfosten (8) befestigt ist, dadurch gekennzeichnet, daß die Stoßstange (2) entsprechende Endbereiche (9) aufweisen, die wenigstens teilweise eine Kante (10) des Pfostens außen abdecken.

2. Kabine nach Anspruch 1, dadurch gekennzeichnet, daß jeder Endbereich (9) der Stoßstange (2) im wesentlichen in einer Position parallel zu einer entsprechenden Seite des Fahrzeuges angeordnet ist.

## Revendications

1. Cabine (1) de véhicule industriel comprenant un pare-chocs avant (2) et un marchepied (3) d'accès à l'intérieur délimité, sur le côté tourné vers ledit pare-chocs (2), par un montant respectif (8), caractérisée en ce que ledit pare-chocs (2) comprend des parties extrêmes respectives (9) qui recouvrent au moins partiellement un bord (10) dudit montant (8) extérieurement.

2. Cabine selon la revendication 1, caractérisée en ce que chacune desdites parties extérieures (9) dudit pare-chocs (2) est disposée essentiellement dans une position parallèle à un côté respectif dudit véhicule.

Fig.1

Fig.2

Fig.3